# EUROPEAN PATENT APPLICATION

(11) **EP 1 046 330 A2**
(43) Date of publication of application: **25.10.2000**
(21) Application number: 00201233.4
(22) Date of filing: 04.04.2000
(51) Int. Cl.: A01C 1/04

(54) **Improved sheet of flexible plastics material for covering vegetables cultivated in ridges**

(30) Priority: 13.04.1999 ES 9900827
(71) Applicant: Reyenvas S.A., 41500 Alcala de Guadaira (Sevilla) (ES)
(72) Inventor: Alvarez Ribalaygua, José Ramon, 39300 Torrelavega (Cantabria) (ES)
(74) Representative: Canela Giménez, Teresa

(57) **Abstract**

The present patent relates to an improved sheet of flexible plastics material for covering vegetables cultivated in ridges which is characterised in that the composite covering sheet is constructed from three juxtaposed sheets of flexible plastics material of equal dimensions which are connected to one another and form a single composite body, by calendering and heat or other suitable means, one of the sheets being white and being disposed at the exterior to minimise the admission of infrared rays and prevent the overheating of the cultivated region; a further, black sheet disposed at the exterior allows sunbeams of predetermined wavelength to pass and increase the heating of the earth, and a thermal sheet which maintains the temperature and improves the heating of said cultivated region when the black layer is situated at the exterior.

## Description

The present patent relates to an improved sheet of flexible plastics material for covering vegetables cultivated in ridges.

Known covering sheets are sheets of single-coloured plastics material for use in ridges for the cultivation of certain vegetables such as asparagus which, for better adaptation to the earth of the ridge and to prevent the heat from escaping by rising from its edges due to the wind, have longitudinal tubes at each of the lateral sides which are filled with earth, increasing the weight of said edges and therefore preventing them from rising.

These known coverings have a single purpose which may be to promote or prevent the passage of infrared rays, depending on whether the cultivation temperature is to be raised or lowered. Thus, the cultivator is obliged to substitute one sheet for another in order to obtain the different result which he desires.

To overcome this drawback, the Applicant has made some improvements to known sheets, as described in his Spanish patent application No. 9801834, in which a composite two-coloured sheet in white and black is produced in order to combine in a single film the two functions of which one involves disposing the white layer at the exterior so that it reflects the infrared rays and heats the earth less and the other involves disposing the black layer at the exterior to allow better absorption of the sunbeams and therefore to increase the heat between the surface of the earth and the internal layer of the composite sheet, in other words in the cultivated region.

However, this new two-layered sheet has the drawback that, during the hours of the day when sunlight does not impinge on it, there is a loss of heat which leads to a reduction in the temperature in the cultivated region.

The present invention, which consists of a new three-layered sheet, has been created to overcome this drawback. Furthermore, the sun's effects in heating the earth can be increased even more with it, if desired.

To assist understanding, a practical embodiment of the subject of the invention will be described hereinafter as a non-limiting example with reference to a sheet of drawings in which:

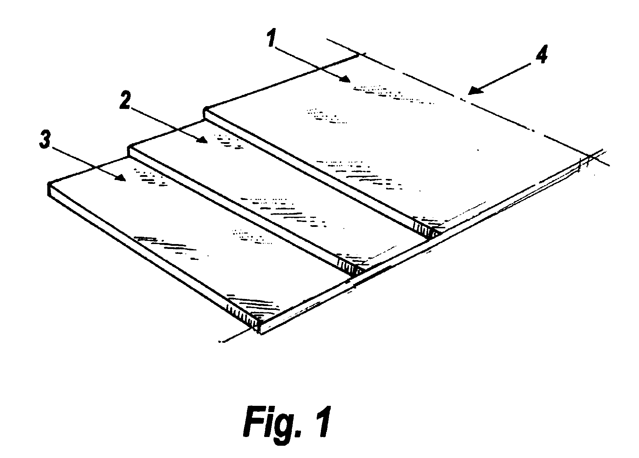

Fig. 1 shows the three layers of the sheet which are juxtaposed and connected to one another to form a single composite sheet which is shown in a longitudinally and transversely shortened development.

According to the invention, to enable the composite covering sheet to reduce the loss of heat from the cultivated region in the cold hours of the day and, furthermore, in appropriate cases, to increase the sun's effects in heating the earth, the new composite sheet is manufactured in three layers.

This sheet is formed by three sheets which are juxtaposed and connected to one another (1, 2 and 3), of equal dimensions, made of flexible plastics material forming a single composite body (4) (Fig. 1) by calendering and heat or other appropriate means.

One of the sheets is coloured white and produced from a material such as low density polyethylene; a further sheet is black and is similarly produced from a material such as low density polyethylene. And the third sheet is a natural thermal film made of a material such a ethylene vinyl acetate (E.V.A.) or ethylene butyl acrylate (E.B.A.), which acts as a filter having a greenhouse effect, allowing the passage of heat to the interior thereof and preventing the discharge of heat to the exterior if the internal temperature of the cultivated region is higher than the external temperature.

The arrangement of the three-layered sheet with the black layer at the exterior promotes the passage of infrared rays with the resultant increase in the heat which impinges on the crop. With this arrangement, the layer of thermal film is able to raise the temperature of the crop even more and to maintain this temperature during the cold hours of the day.

Therefore, in cases where the passage of infrared is to be impeded to prevent over-heating of the cultivated region, for example in Summer when the intensity of the sunbeams is very high, the white layer is arranged at the exterior. In this case, the layer of thermal film will keep the temperature constant.

In this way, the farmer with a single covering sheet can place it in the shelves of the greenhouse to achieve the described effects.

It will be appreciated that the constructional details will be variable providing this does not affect, change or modify the essence of the invention.

## Claims

1. Improved sheet of flexible plastics material for covering vegetables cultivated in ridges, characterised in that the composite covering sheet is constructed from three juxtaposed sheets of flexible plastics material of equal dimensions which are connected to one another and form a single composite body, by calendering and heat or other suitable means, one of the sheets being white and being disposed at the exterior to minimise the admission of infrared rays and prevent the overheating of the cultivated region; a further, black sheet disposed at the exterior allows sunbeams of predetermined wavelength to pass and increase the heating of the earth, and a further thermal sheet which maintains the temperature of the cultivated region and improves the heating of said cultivated region when the black layer is situated at the exterior.
